# EUROPEAN PATENT SPECIFICATION

(11) **EP 2 176 693 B1**
(45) Date of publication and mention of the grant of the patent: **05.01.2011**
(21) Application number: 08789534.8
(22) Date of filing: 04.08.2008
(51) Int. Cl.: G02B 6/00

(54) **LIGHTING DEVICE**
BELEUCHTUNGSVORRICHTUNG
DISPOSITIF D'ÉCLAIRAGE

(30) Priority: 10.08.2007 EP 07114139
(43) Date of publication of application: 21.04.2010
(73) Proprietor: Koninklijke Philips Electronics N.V., 5621 BA Eindhoven (NL)
(72) Inventor: VAN GORKOM, Ramon, P., NL-5656 AE Eindhoven (NL); JAK, Martin, J., J., NL-5656 AE Eindhoven (NL); VERBEEK, Gilbert, M., NL-5656 AE Eindhoven (NL); KRIJN, Marcellinus, P., C., M., NL-5656 AE Eindhoven (NL)
(74) Representative: Bekkers, Joost J.J
(86) International application number: PCT/IB2008/053109
(87) International publication number: WO 2009/022257

(56) References cited:
- WO-A-2006/064434
- WO-A-2006/129220
- WO-A-2007/060594
- WO-A-2008/015601
- WO-A-2008/047292
- US-A- 5 188 452
- US-A1- 2005 047 135
- US-A1- 2005 117 125
- US-A1- 2007 064 417

## Description

### TECHNICAL FIELD

The present invention relates to a lighting device.

### BACKGROUND OF THE INVENTION

Different techniques have been applied for provision of white light of desired color temperature. An example is to use a dichroic mixer and collimator as disclosed in WO 2006/129220 A1, where dichroic filters are used for mixing and collimating light from a plurality of light emitting diodes (LEDs) emitting light with different colors. The aggregated mixed output light has all of the different colors, and can thus be considered as white light. However, it is still a *problem that color distribution over the provided light pattern may not be uniform, thus causing discolorations in some parts of the light pattern.

US2007/064417 discloses a illuminating device which, as a light source for a backlight device, mixes the colors of light rays of three prime colors radiated by light emitting diodes.

### SUMMARY OF THE INVENTION

In view of the above, an objective of the invention is to solve or at least reduce the problems discussed above. In particular, an objective is to provide improved light pattern in sense of decreased discolorations.

The present invention is based on the understanding that combination of a first color mixing, where collimation also is provided, together with a second color mixing in a mixing rod is particularly advantageous, since the collimation features of the first color mixing improve color mixing in the second color mixing. Thus, the surprising effect of the aggregate color mixing is that the total mixing features of a lighting device according to the present invention is better than could have been expected from the addition of mixing features of the dichroic mixer and the mixing rod considered as single elements. As an additional, but optional feature, the inventors have found that by having a smaller exit area of the mixing rod than its receiving area is possible since the received light is to some degree collimated by the first color mixer. Although this feature of the mixing rod provides some decollimation, the mixing rod can be made shorter, and depending on the use and type of a second optional collimator, the second collimator will be easier to apply, and size of the second collimator can also be reduced.

According to a first aspect of the present invention, there is provided a lighting device comprising a plurality of light sources providing light in different wavelengths, a first collimating means having a receiving end and an output end wherein said light sources are arranged at said receiving end, and said collimating means comprising a set of dichroic filters arranged as sub-collimators to each of said plurality of light sources such that, for each light source, said sub-collimator collimates the light from its light source, and said dichroic filter of said each light source is translucent for light from adjacent light sources of different wavelength such that mixed and collimated light is outputtable at said output end; a mixing rod having a receiving end and an output end, wherein said first collimating means is arranged such that light coupling from said output end of said first collimating means to said receiving end of said mixing rod is enabled such that color mixed light is outputtable at said output end of said mixing rod; and a second collimating means arranged at said output end of said mixing rod.

This provides improved color mixing compared to using only dichroic mixer or mixing rod of comparable size.

This provides collimated light output from the lighting device.

The mixing rod may have a cross sectional area at a position along a general light propagation direction that is smaller than a cross sectional area at said receiving end of said mixing rod. Cross sectional area is here to be construed as area of cross section of optically operative part of mixing rod in a direction perpendicular to a general light direction. The position where said cross sectional area is smaller than a cross sectional area at said receiving end of said mixing rod may be at said output end of said mixing rod.

The mixing rod may have facets. The mixing rod may be folded, bent, or curved such that a light propagation length through said mixing rod is longer than outer dimensions of the mixing rod.

Other objectives, features and advantages of the present invention will appear from the following detailed disclosure, from the attached dependent claims as well as from the drawings.

### BRIEF DESCRIPTION OF THE DRAWINGS

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Figs 1 and 2 schematically illustrates examples on dichroic mixers;
Figs 3 to 10 schematically illustrates examples of mixing rods;
Figs 11 to 13 schematically illustrates examples of collimators;
Figs 14 and 15 illustrates alternative embodiments of dichroic mixers;
Fig 16 schematically illustrates the principle for a lighting device according to the present invention;
Figs 17 to 19 illustrates exemplary embodiments of a lighting device according to the present invention; and
Figs 20 to 22 illustrates alternative embodiments of Cassegrain collimators.

### DETAILED DESCRIPTION OF PREFERRED EMBODIMENTS

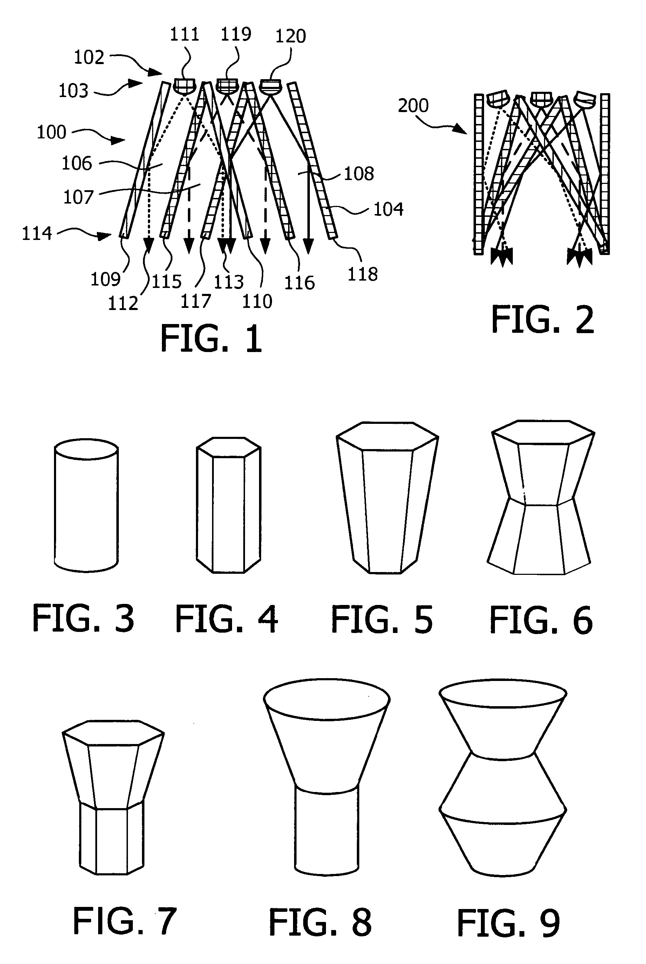

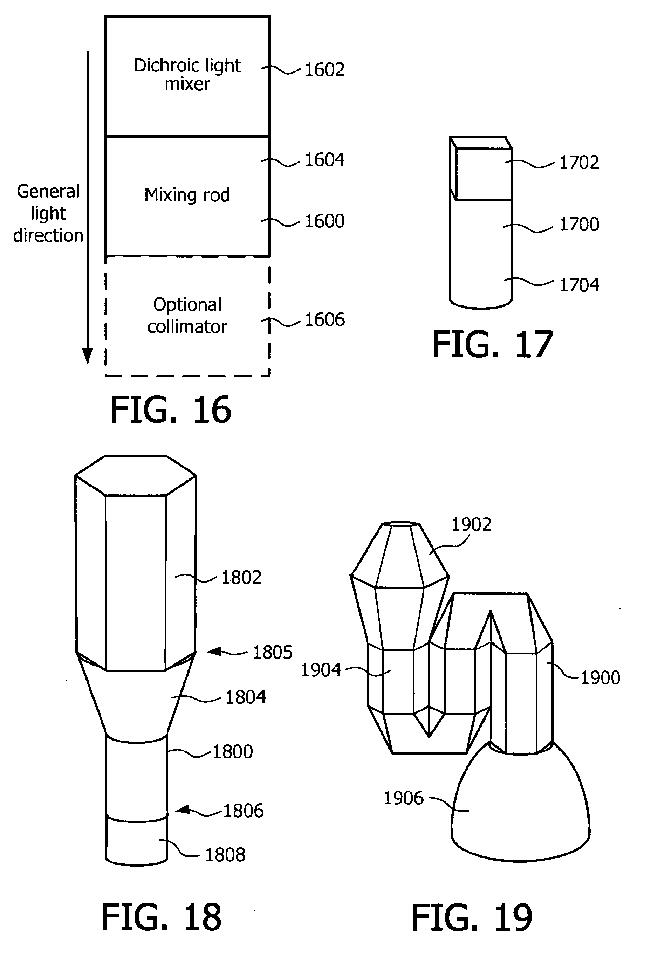

With reference to Figs 1 to 15, elements for building up a lighting device according to the present invention. A multitude of examples are given, but for the sake of conciseness, only exemplary variants of the different elements are explicitly disclosed, but as will be readily understood by a person skilled in the art, further constellations of the presented elements, as well as variants of the presented elements, e.g. by other but similar geometry etc., are equally possible as the embodiments of lighting devices according to the present invention discussed with reference to Figs 16 to 19.

Fig. 1 schematically illustrates a light unit 100 comprising a plurality of light sources 102 each having different wavelength ranges such that the light unit 100 is able to provide essentially white light with a preferred color temperature. Choice and control of the light sources 102 to achieve the preferred color temperature is known within the art, and is not a part of the present invention. However, for the purpose of better understanding, it should be noted that the light sources 102 can advantageously comprise light emitting diodes (LEDs), for example providing red, green and blue light, respectively. The light sources 102 are arranged at a receiving end 103 of a collimating means 104 of the light unit 100.

Thus, the light unit 100 comprises the collimating means 104 comprising a sub-collimator 106, 107, 108 for each of the light sources 102. For the understanding of the invention, sub-collimator 106 is looked at. Sub-collimator 106 comprises collimation elements 109, 110 which are reflective for the light that is emitted from the corresponding light source 111. The collimation elements 109, 110 are preferably dichroic filters. Thus, these filters, i.e. collimation elements 109, 110, can be translucent for other colors of light, thus enabling the compact structure illustrated in Fig. 1 with overlapping sub-collimators in space. If for example light source 111 emits red light, the collimating elements are arranged to reflect red light, but is more or less translucent for green and blue light. Such a filter can be achieved by a glass plate with on each side a 16-layer SiO₂ and Ta₂O₅ filter. This will reflect light with a wavelength of about a little more than 600 nm, i.e. red light, but transmit visible light with a shorter wavelength than that, i.e. green and blue light. If two exemplary rays 112, 113 of light from the light source 111 is regarded, the left ray 112 in Fig. 1 will be reflected by the corresponding collimating element 109 and exit at an output end 1 14 of the collimating means 104, and the right ray 113 in Fig. 1 will be transmitted through a neighboring collimating element 115, reflected by the corresponding collimating element 110, transmitted through a next neighboring collimating element 117, and exit at the output end 114 of the collimating means 104. By the properties of the neighboring collimating elements 115, 117, the red light is able to pass them. For example, collimating element 115 can be reflective of green light but transmissive for red. As will be explained below, the collimating element 115 can optionally be a band stop type filter and thus also transmit blue, e.g. a glass plate with on each side a 14-layer SiO₂ and Ta₂O₅ filter.

In a similar way, light from light source 119, for example green light, is collimated by collimation elements 115 and 116 while just passing through neighboring collimation elements 110, 117, and light from light source 120, for example blue light, is collimated by collimation elements 117 and 118 while just passing through neighboring collimation elements 110, 116. Thus, aggregated light with desired properties is emitted at the output end 114 of the collimation means 104. Collimation elements can thus be reflective for blue light and transmissive for red and green light, e.g. by a glass plate with on each side a 12-layer SiO₂ and Ta₂O₅ filter.

Fig. 2 schematically illustrates a light unit 200 of a similar type as the one discussed with reference to Fig. 1, but with a slightly more compact structure. All of the sub-collimators in the embodiment depicted in Fig. 2 have a common output area, i.e. the overlap is total at an output end of the light unit 200 instead of only partial overlap as illustrated in Fig. 1.

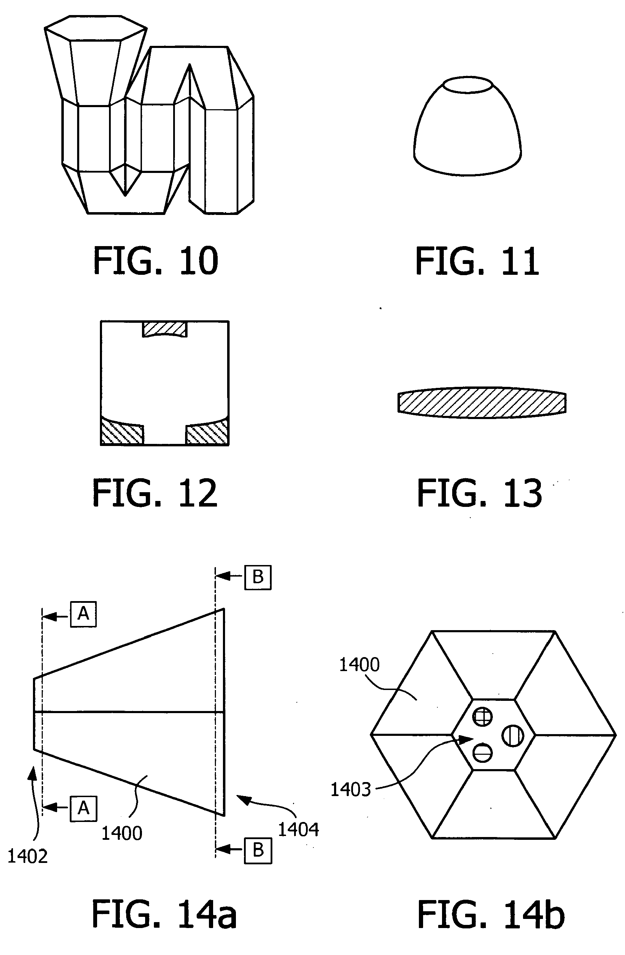

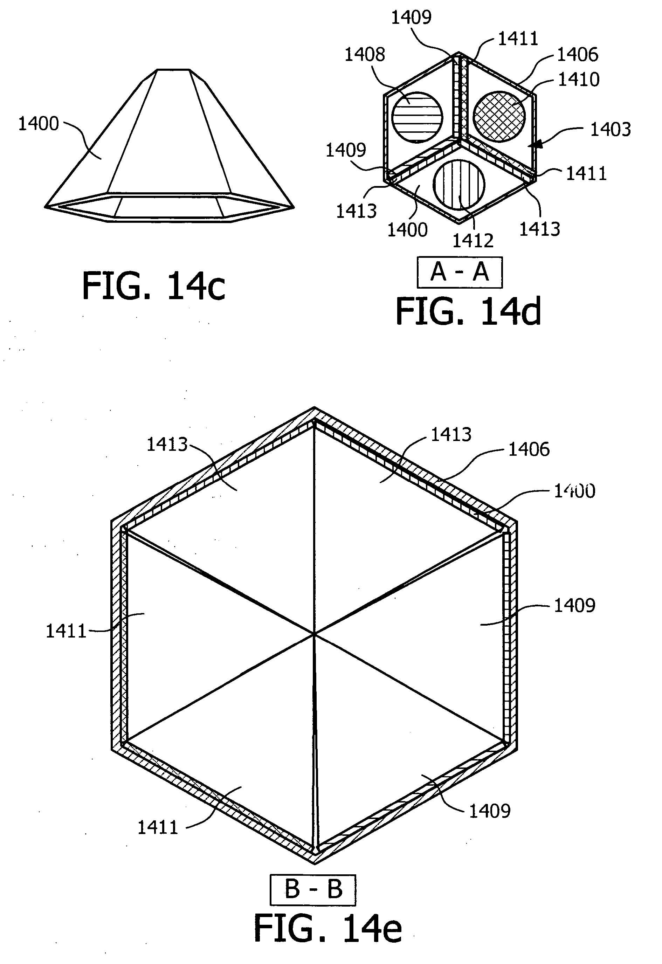

Figs 1 and 2 illustrate principle for dichroic mixing and collimation of light, which is also disclosed in WO 2006/12920 A1, and therefore, no further elucidation of geometry and versions are presented here for the sake of conciseness, but reference is made to the above mentioned document. However, with reference to Figs 13 and 14, additional embodiments of dichroic mixers are disclosed below.

Figs 3 to 10 illustrate in perspective views different embodiments of mixing rods, i.e. an optically elongated element in which light is mixed by repeated internal reflections along its path through the mixing rod. The mixing rods can be made of translucent material where reflections rely on total internal reflection (TIR), or be made of a reflective shell, or a combination of translucent material with a reflective surrounding shell, such as a reflective coating.

Fig. 3 illustrates a cylindrical mixing rod. Fig. 4 illustrates a mixing rod having facets, here illustrated as a hexagonal mixing rod. However, the number of facets and their distribution can be chosen in any suitable way.

Fig. 5 illustrates a mixing rod having a larger receiving area than output area, which enhances mixing. This is possible in the present invention since the light received by the mixing rod is already collimated to some degree by the dichroic mixer, as will be further elucidated below with reference to Figs 16 to 19. The mixing rod in Fig. 5 also has facets, but the feature of having a larger receiving area than output area for enhancing mixing is also applicable to mixing rods without facets.

Fig. 6 illustrates a mixing rod having a larger receiving area than an area at a position along the mixing rod, which also enhances mixing. The mixing rod in Fig. 6 also has facets, but the feature of having a larger receiving area than the area on the position along the mixing rod for enhancing mixing is also applicable to mixing rods without facets. The position along the mixing rod can be chosen to any suitable position along the mixing rod.

Fig. 7 illustrates a mixing rod having a larger receiving area than output area for enhancing mixing, like the mixing rod illustrated in Fig. 5, but here the mixing rod also has a straight part. Fig. 8 also illustrates a mixing rod having a larger receiving area than output area for enhancing mixing and having a straight part, like the mixing rod illustrated in Fig. 7, but here the mixing rod has a circular cross section.

Fig. 9 illustrates a mixing rod having a larger receiving area than an area at a position along the mixing rod and than an output area, which also enhances mixing. The mixing rod also has a larger cross sectional area at a second position between said first position and the output. The mixing rod in Fig. 9 has a circular cross section, but the feature of having a larger receiving area than the area on the first position along the mixing rod, a larger cross sectional area at a second position along the mixing rod between the first position and the output for enhancing mixing is also applicable to mixing rods with facets. The first and second positions along the mixing rod can be chosen to any suitable position along the mixing rod.

Fig. 10 illustrates a mixing rod having a folded light path to make light propagation length through said mixing rod longer than outer dimensions of the mixing rod. Fig. 10 illustrates a mixing rod having facets and having a larger receiving area than output area. However, folding the light path can be applied together with any of the features of the mixing rods discussed with reference to Figs 3 to 9. To achieve a light propagation length through said mixing rod longer than outer dimensions of the mixing rod, the mixing rod can also be bent or curved.

Figs 11 to 13 illustrate examples on an optional collimator to be applied if collimated light is desires as output from a lighting device according to the present invention. As for the mixing rod, the collimator can be made of translucent material where reflections rely on total internal reflection (TIR), or be made of a reflective shell, or a combination of translucent material with a reflective surrounding shell, such as a reflective coating.

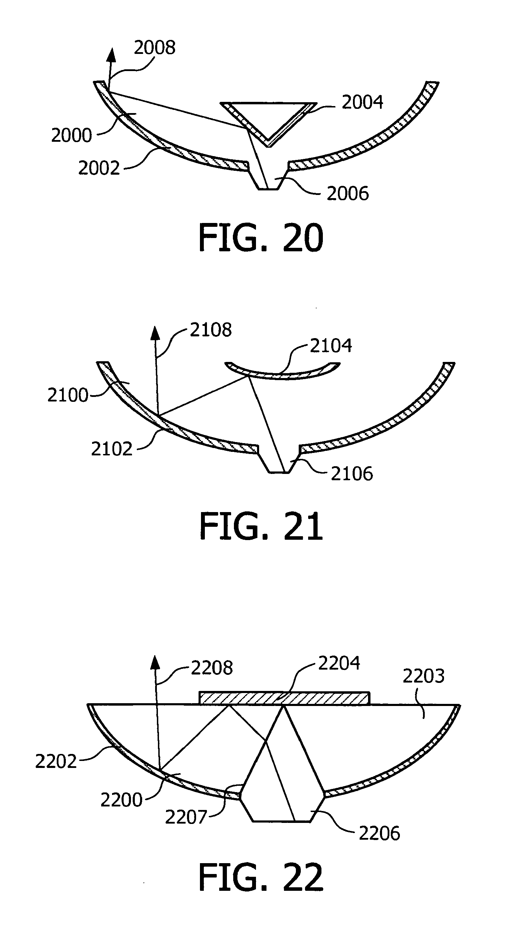

Fig. 11 illustrates in perspective view a parabolic collimator. Fig. 12 illustrates in sectional view a Cassegrain collimator. Further examples of Cassegrain collimators are illustrated in Figs 20 to 22. Fig 20 illustrates a Cassegrain collimator 2000 comprising a parabolic mirror 2002 and a light reflecting cone 2004. For this collimator 2000, the light received at a light receiving end 2006 needs to be at least slightly collimated, otherwise some light might miss the reflective cone 2004. An exemplary light ray 2008 is illustrated. Fig. 21 illustrates a Cassegrain collimator 2100 comprising a parabolic mirror 2102 and a curved mirror 2104. For this collimator 2100, the light received at a light receiving end 2106 needs to be at least slightly collimated, otherwise some light might miss the curved mirror 2104. An exemplary light ray 2108 is illustrated. Fig. 22 illustrates a Cassegrain collimator 2200 comprising a parabolic mirror 2202, a glass or acrylic glass body 2203 and a mirror 2204. For this collimator 2300, the light received at a light receiving end 2206 do not necessary need to be collimated since a recess or at least refractive surface 2207 is provided. An exemplary light ray 2208 is illustrated. Fig. 13 illustrates in sectional view a collimating lens. The lens can be a more complex structure of refracting elements than illustrated in Fig. 13, as can be readily understood by a person skilled in the art.

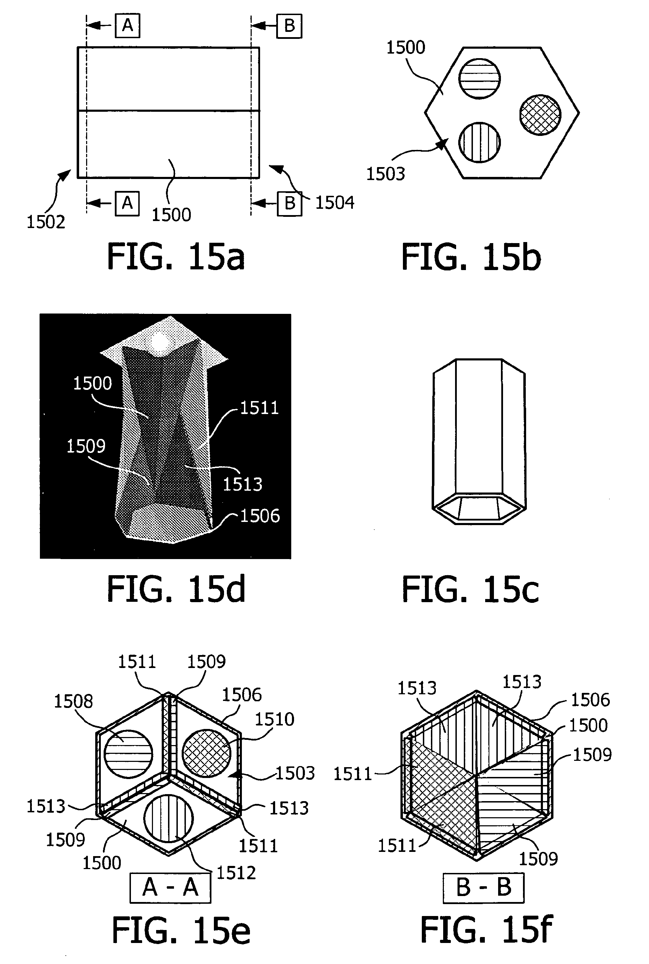

Figs 14 and 15 illustrate additional embodiments of dichroic mixers having similar function as the dichroic mixers discussed with reference to Figs 1 and 2, and in WO 2006/129220 A1. However, the inventors have found that, both due to compactness of the mixer and to the quality of the light output from the dichroic mixer, it is advantageous to place the light sources based on a two dimensional approach instead of the one dimensional distribution discussed with reference to Figs 1 and 2, and in WO 2006/129220 A1. In the embodiments discussed with reference to Figs 14 and 15, three light sources are used, and six-sided collimating means. However, any suitable number of light sources and sides of the collimating means is applicable, such as four light sources and four-sided collimating means, four light sources and eight-sided collimating means, etc. It is convenient that the number of light sources and the number of sides is a multiple (1, 2, 3,...) of each other.

Fig. 14a illustrates a side view of a dichroic mixer 1400 according to an embodiment. The dichroic mixer 1400 according to the embodiment can be considered as a three-dimensional arrangement of the light sources and filters of the embodiment discussed with reference to Fig. 1, but where a surrounding reflector 1406 makes part of sub-collimators. The dichroic mixer has a receiving end 1402 at which light sources 1403 are placed, and an output end 1404 where mixed and collimated light is outputtable. Fig. 14b is a view of the dichroic mixer 1400 from the light source side. Fig. 14c is a perspective view of the dichroic mixer 1400. Fig. 14d is a sectional view of the dichroic mixer 1400 along line A-A in Fig. 14a, where we can see a surrounding reflector 1406, a first light source 1408 and its corresponding dichroic filter 1409, which operate within a first wavelength range, a second light source 1410 and its corresponding dichroic filter 1411, which operate withing a second wavelength range, and a third light source 1412 and its corresponding dichroic filter 1413, which operate within a third wavelength range. Each dichroic filter 1409, 1411, 1413 forms together with the surrounding reflector 1406 a sub-collimator for its associated light source. This can be seen when observing Fig. 14e, which is a sectional view of the dichroic mixer 1400 along line B-B in Fig. 14a. It should be observed that relation between Fig. 14d and Fig. 14e is in relative scale. Thus it can be seen that all of the sub-collimators share the same output area.

Fig. 15a illustrates a side view of a dichroic mixer 1500 according to an embodiment. The dichroic mixer 1500 according to the embodiment can be considered as a three-dimensional arrangement of the light sources and filters of the embodiment discussed with reference to Fig. 2, but where a surrounding reflector 1506 makes part of sub-collimators. The dichroic mixer has a receiving end 1502 at which light sources 1503 are placed, and an output end 1504 where mixed and collimated light is outputtable. Fig. 15b is a view of the dichroic mixer 1500 from the light source side. Fig. 15c is a perspective view of the dichroic mixer 1500. Fig. 15d illustrates a three-dimensional view of the dichroic mixer 1500, where parts of the surrounding reflector is removed to make the dichroic filters 1509, 1511, 1513 visible. Fig. 15e is a sectional view of the dichroic mixer 1500 along line A-A in Fig. 15a, where we can see a surrounding reflector 1506, a first light source 1508 and its corresponding dichroic filter 1509, which operate within a first wavelength range, a second light source 1510 and its corresponding dichroic filter 1511, which operate withing a second wavelength range, and a third light source 1512 and its corresponding dichroic filter 1513, which operate within a third wavelength range. Each dichroic filter 1509, 1511, 1513 forms together with the surrounding reflector 1506 a sub-collimator for its associated light source. This can be seen when observing Fig. 15f, which is a sectional view of the dichroic mixer 1500 along line B-B in Fig. 15a.

Fig. 16 schematically illustrates the principle of a lighting device 1600 according to the present invention, comprising a dichrole light mixer 1602 providing mixed and collimated light to a mixing rod 1604, in which the light is further mixed to be output. If collimated light is desired, the mixing rod 1604 outputs the light to an optional collimator 1606. The dichroic light mixer 1602 can be any of the dichroic light mixers discussed with reference to Figs 1, 2, 14, or 15, or disclosed in WO 2006/129220. The mixing rod 1604 can be any of the mixing rods discussed with reference to Figs 3 to 10, and the collimator can be any suitable collimator, e.g. any of those discussed with reference to Figs 11 to 13.

Figs 17 to 19 illustrates examples of combinations according to what is discussed with reference to Fig. 16. As is readily understood by a person skilled in the art after utilizing what disclosed in the above detailed description, a multitude of other combinations and variants are equally possible, but for the sake of conciseness, these are omitted in the present disclosure.

Fig. 17 illustrates a lighting device 1700 having a dichroic mixer with light sources 1702, for example as disclosed with reference to Fig. 2, together with a cylindrical mixer rod 1704 as the one disclosed with reference to Fig. 3.

Fig. 18 illustrates a lighting device 1800 having a dichroic mixer 1802, for example as disclosed with reference to Fig. 15, together with a mixer rod 1804 having larger area at its receiving end 1805 than at its output end 1806. At the output end 1806 of the mixer rod 1804, a collimator 1808 is attached for providing collimated output light. The collimator 1808 is for example a Cassagrain collimator as disclosed with reference to Fig. 12.

Fig. 19 illustrates a lighting device 1900 having a dichroic mixer 1902, for example as disclosed with reference to Fig. 14, providing mixed and collimated light to a mixing rod 1904 having its optical path folded such that the outer dimensions are reduced, and having a smaller output end area than receiving end area. The mixing rod 1904 provides light to a collimator 1906, for example a parabolic collimator.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A lighting device (1600, 1700, 1800, 1900) comprising:
a plurality of light sources (102, 111, 119, 120, 1403,1408, 1410, 1410, 1508, 1510, 1512) providing light in different wavelengths,
a first collimating means (104, 1400, 1500) having a receiving end (103, 1402) and an output end (114, 1404) wherein said light sources are arranged at said receiving end, and said collimating means comprising a set of dichroic filters (109, 110, 115, 116, 117, 118, 1409, 1411, 1413, 1509, 1511, 1513) arranged as sub-collimators (106, 107, 108) to each of said plurality of light sources such that, for each light source, said sub-collimator collimates the light from its light source, and said dichroic filter of said each light source is translucent for light from adjacent light sources of different wavelength such that mixed and collimated light is outputtable at said output end;
the lighting device being **characterized by**
a mixing rod (1604, 1704, 1804, 1904) having a receiving end (1805) and an output end (1806), wherein said first collimating means is arranged such that light coupling from said output end of said first collimating means to said receiving end of said mixing rod is enabled such that color mixed light is outputtable at said output end of said mixing rod; and
a second collimating means (1606, 1808, 1906) arranged at said output end of said mixing rod.

2. The lighting device according to claim 1, wherein said mixing rod has a cross sectional area at a position along a general light propagation direction that is smaller than a cross sectional area at said receiving end of said mixing rod.

3. The lighting device according to claim 2, wherein said position where said cross sectional area is smaller than a cross sectional area at said receiving end of said mixing rod is at said output end of said mixing rod.

4. The lighting device according to any of the preceding claims, wherein said mixing rod has facets.

5. The lighting device according to any of the preceding claims, wherein said mixing rod is folded, bent, or curved such that a light propagation length through said mixing rod is longer than outer dimensions of the mixing rod.

## Patentansprüche

1. Beleuchtungsvorrichtung (1600, 1700, 1800, 1900), die Folgendes umfasst:
eine Anzahl Lichtquellen (102, 111, 119, 120, 1403, 1408, 1410, 1508, 1510, 1512), die Licht in verschiedenen Wellenlängen erzeugen,
ein erstes Eingrenzungsmittel (104, 1400, 1500) mit einem Eingangsende (103, 1402) und einem Ausgangsende (114, 1404), wobei die genannten Lichtquellen an dem genannten Eingangsende vorgesehen sind, und wobei das genannte Eingrenzungsmittel einen Satz Kaltlichtfilter (109, 110, 115, 116, 117, 118, 1409, 1411, 1413, 1509, 511,1513) aufweist, die als Hilfseingrenzungsmittel (106, 107, 108) an jeder der genannten Lichtquellen derart vorgesehen sind, dass für jede Lichtquelle der genannte Hilfskollimator das Licht der zugeordneten Lichtquelle eingrenzt, und wobei das genannte Kaltlichtfilter jeder genannten Lichtquelle für Licht von benachbarten Lichtquellen mit einer anderen Wellenlänge lichtdurchlässig ist, und zwar derart, dass gemischtes und eingegrenztes Licht an dem genannten Ausgangsende ausgestrahlt werden kann;
wobei die Beleuchtungsvorrichtung **gekennzeichnet ist durch**
einen Mischstab (1604, 1704, 1804, 1904) mit einem Eingangsende (1805) und einem Ausgangsende (1806), wobei das genannte erste Eingrenzungsmittel derart angeordnet ist, dass eine Lichtkopplung von dem genannten Ausgangsende des genannten ersten Eingrenzungsmittels zu dem genannten Eingangsende des genannten Mischstabs ermöglicht wird, so dass in Farbe gemischtes Licht an dem genannten Ausgang des genannten Mischstabs ausgeliefert wird; und
ein zweites Eingrenzungsmittel (1606, 1808, 1906), vorgesehen an dem genannten Ausgangsende des genannten Mischstabs.

2. Beleuchtungsvorrichtung nach Anspruch 1, wobei der genannte Mischstab ein Querschnittsgebiet in einer Lage in einer allgemeinen Lichtfortpflanzungsrichtung aufweist, das kleiner ist als ein Querschnittsgebiet an dem Eingangsende des genannten Mischstabs.

3. Beleuchtungsvorrichtung nach Anspruch 2, wobei die genannte Stelle, wo das Querschnittsgebiet kleiner ist als ein Querschnittsgebiet an dem genannten Eingangsende des genannten Mischstabs, an dem genannten Ausgangsende des genannten Mischstabs ist.

4. Beleuchtungsvorrichtung nach einem der vorstehenden Ansprüche, wobei der genannte Mischstab Facetten hat.

5. Beleuchtungsvorrichtung nach einem der vorstehenden Ansprüche, wobei der genannte Mischstab gefaltet, gekrümmt oder gewölbt ist, so dass eine Lichtfortpflanzungslänge durch den genannten Mischstab länger ist als die Außenabmessungen des Mischstabs.

## Revendications

1. Dispositif d'éclairage (1600, 1700, 1800, 1900) comprenant :
une pluralité de sources de lumière (102, 111, 119, 120, 1403, 1408, 1410, 1508, 1510, 1512) fournissant de la lumière ayant des longueurs d'onde différentes,
des premiers moyens de collimation (104, 1400, 1500) ayant une extrémité de réception (103, 1402) et une extrémité de sortie (114, 1404) où lesdites sources de lumière sont disposées à l'endroit de ladite extrémité de réception et où lesdits moyens de collimation comprenant un ensemble de filtres dichroïques (109, 110, 115, 116, 117, 118, 1409, 1411, 1413, 1509, 1511, 1513) sont agencés en tant que des sous-collimateurs (106, 107, 108) à l'endroit de chacune de ladite pluralité de sources de lumière, de sorte que, pour chaque source de lumière, ledit sous-collimateur collimate la lumière en provenance de sa source de lumière, et ledit filtre dichroïque de ladite chaque source de lumière est translucide à la lumière en provenance de sources de lumières adjacentes ayant une longueur d'onde différente, de sorte que de la lumière mixte et collimatée peut être sortie à l'endroit de ladite extrémité de sortie ;
le dispositif d'éclairage étant **caractérisé par** :
une tige de mélange (1604, 1704, 1804, 1904) ayant une extrémité de réception (1805) et une extrémité de sortie (1806) où lesdits premiers moyens de collimation sont agencés de telle façon que le couplage de lumière s'étendant à partir de ladite extrémité de sortie desdits premiers moyens de collimation vers ladite extrémité de réception de ladite tige de mélange soit activé, de sorte que la lumière de couleurs mixtes peut être sortie à l'endroit de ladite extrémité de sortie de ladite tige de mélange ; et
des deuxièmes moyens de collimation (1606, 1808, 1906) qui sont disposés à l'endroit de ladite extrémité de sortie de ladite tige de mélange.

2. Dispositif d'éclairage selon la revendication 1, dans lequel ladite tige de mélange présente une zone en coupe transversale dans une position le long d'une direction générale de propagation de lumière qui est plus petite qu'une zone en coupe transversale à l'endroit de ladite extrémité de réception de ladite tige de mélange.

3. Dispositif d'éclairage selon la revendication 2, dans lequel ladite position dans laquelle ladite zone en coupe transversale est plus petite qu'une zone en coupe transversale à l'endroit de ladite extrémité de réception de ladite tige de mélange se situe à l'endroit de ladite extrémité de sortie de ladite tige de mélange.

4. Dispositif d'éclairage selon l'une quelconque des revendications précédentes 1 à 3, dans lequel ladite tige de mélange présente des facettes.

5. Dispositif d'éclairage selon l'une quelconque des revendications précédentes 1 à 4, dans lequel ladite tige de mélange est pliée, fléchie ou courbée de telle façon qu'une longueur de propagation de lumière à travers de ladite tige de mélange soit plus grande que des dimensions extérieures de la tige de mélange.
